# EUROPEAN PATENT SPECIFICATION

(11) **EP 3 282 142 B1**
(45) Date of publication and mention of the grant of the patent: **02.10.2019**
(21) Application number: 16425085.4
(22) Date of filing: 08.08.2016
(51) Int. Cl.: F16D 3/32

(54) **WIDE-ANGLE CONSTANT VELOCITY JOINT**
HOMOKINETISCHES WEITWINKEL WELLENGELENK
GRAND-ANGLE JOINT HOMOCINÉTIQUE

(43) Date of publication of application: 14.02.2018
(73) Proprietor: Benzi & Di Terlizzi s.r.l., 20065 Inzago (MI) (IT)
(72) Inventor: Benzi, Vito Carlo, 20065 Inzago (MI) (IT)
(74) Representative: Ferraiolo, Ruggero

(56) References cited:
- EP-A1- 1 683 703
- WO-A1-2009/000827
- CN-U- 202 560 873
- JP-A- H01 210 619
- JP-A- 2001 140 920
- US-A1- 2002 187 840

## Description

### Technical field

The invention lies in the area of mechanical power transmission systems in use on agricultural machines that work on rugged and dishevelled terrains, in particular of transmissions where the motion supplied from a tractor involves the front yoke and the rear yoke under a constant velocity, the angle between the two axes of the yokes reaching a maximum value of 25° or higher in some working condition.

### Prior art.

There are several devices made by the applicant and third parties that perform the same function of transmitting the motion in different ways.

Among the known documents there are the following patent documents relating in part to the technical field of this application: The document closest to the application is US 2002/0187840 A1 which discloses a centered double universal joint where the displacement of an assembly "*second bearing race* /*first bearing journal*" is generated by a secondary force transmitted from a first bearing journal, in the form of a pin, to an outer ring which slides transversely along a lower surface of a guiding projection in a central guiding disc.

Document EP 1683703 A1 discloses a steering column for supporting a steering shaft connected with a steering wheel. An assembly of known mechanical means are provided, including an elastic coupling between the joint and the pinion which prevents vibrations to be transferred from an element to the other, this being the real scope of the device. A double Cardan constant velocity joint is comprised where rotating balls are sited in opposite housings of a sliding centering disc.

Document WO 2009/000827 A1 discloses a homokinetic shaft joint for a torque locking connection of a shaft to another shaft, the shafts being reciprocably angled and the device being substantially characterized in that the joint is realized as a double ball . constant velocity joint where a plurality of spherical elements is housed in a spherical plate for avoiding non uniform rotations and affording transmission of high torque with little play under large bend or adjustment angles.

### Drawbacks of the prior art.

In the wide-angle joints made in a standard configuration, at the top of the front yoke and of the rear yoke, an integral ball, free to move along a runway, is obtained in a radial plate. During the rotation of the front yoke, through a contact point, it is caused the radial movement of the plate contained and held in place by a wide-angle body, the plate, in turn, acting on the ball of the rear yoke causing a rotation equal to that of the front yoke. In this embodiment of the joint there is a high wear of the yoke and of the plate due to the high concentrated pressure on the area where the two components are in contact, as well as a rather hard movement of the parts in contact, the latter drawback being mainly caused, in the device disclosed by document US 2002/0187840 A1, by a bearing race (26) working in a horizontal position, whilst the claimed runway (12) is working coaxial with the axis of the yoke.

### Object of the invention.

The main scope of the invention is to produce a device where the key moving element and the key moved element are in direct contact to make as smooth as possible and as simple as possible the transmission of the movements in
a device destined to work on difficult terrains.

### Background of the invention.

Said objects are achieved by introducing, between two opposite yokes, a known floating plate which, in a new way, slidingly receives in suitable housings two opposite swinging spherical parts made in swinging spherical bearings carrying a through hole which works as a runway for a pin of the respective yoke.The variation of the angle . between the yoke and the transverse axis of the joint moves the centre of rotation of the joint, so that the pin of each yoke runs along said runway for thrusting the plate.

The system is so realized that the surfaces of the spherical parts and of the housing in the plate are wide enough to break down the wear of the components in working contact.

### Advantages of the invention.

Advantages of the invention are the following:
a. The assembly "plate and spherical bearings", new feature in this field of agricultural machines, is compact, causes a smooth transmission of the movements, is simple to assemble and maintain and is suitable for generating wide contact surfaces for giving the system a longer useful life.
b. The component - yoke with pin - on which the spherical part slides is economical and compact.

### Example of the invention.

The invention will be described now by way of example of embodiment and the help of the drawing in which:
- Fig. 1 is a first sectional view, the
- Fig. 2 is a second sectional view and
- Fig. 3 is a third sectional view.

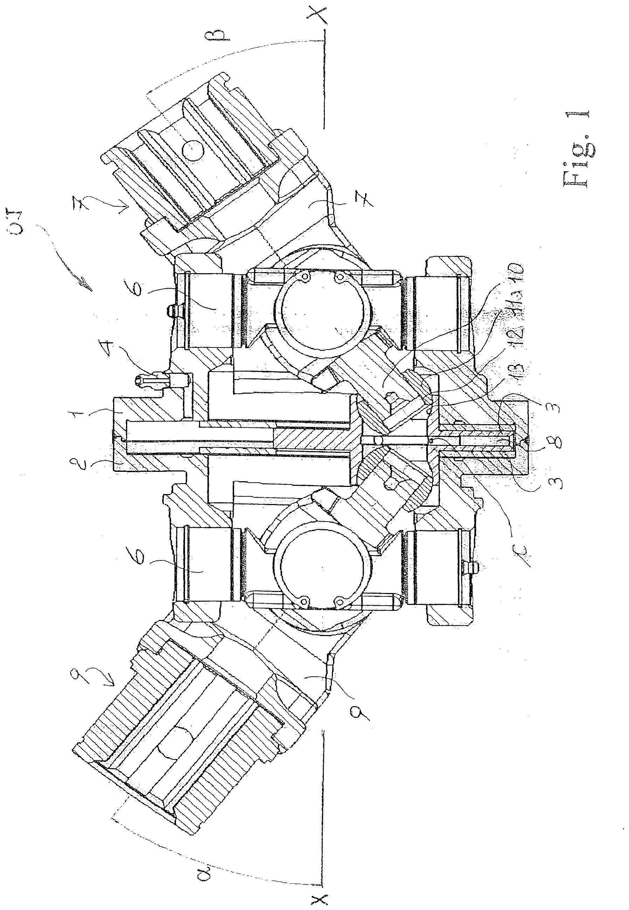

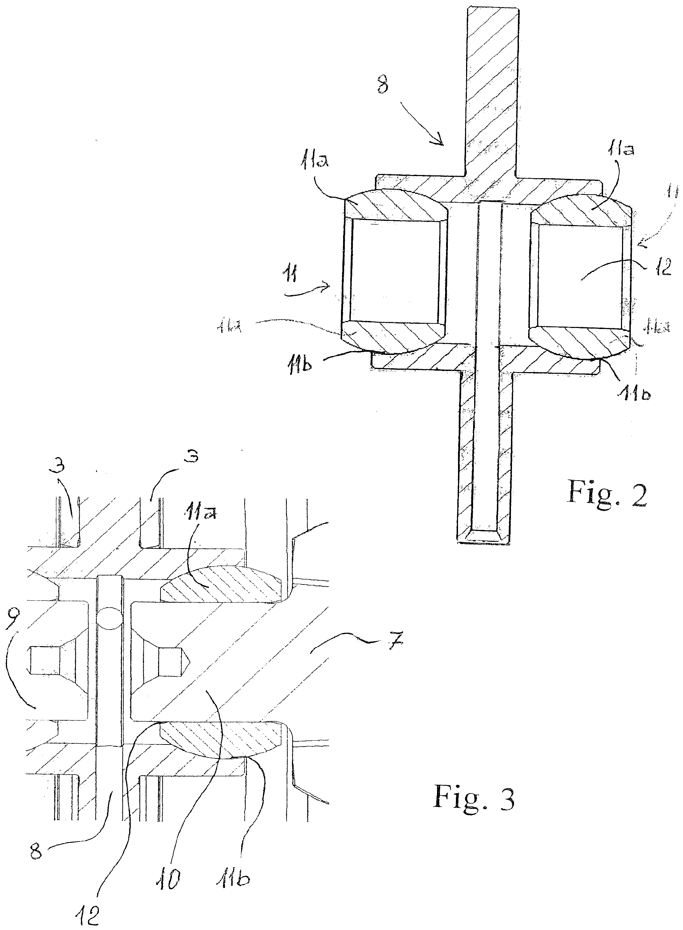

With reference to Fig. 1, the wide-angle constant-velocity body OJ comprises two opposite flanged yokes 1, 2 and two opposite floating shims 3 between which there is a floating plate 8 bearing two opposite spherical bearings 11 each comprising two swinging spherical parts 11a mounted hot into corresponding housings or contact surfaces 11b (see figures 2, 3)) obtained by a milling in the floating plate 8. Alternatively, the floating shims 3 can be fixed, housed in suitable locations. These opposite components become by . welding a single assembly comprising the floating plate 8 at its centre.

The instantaneous speed of the front yoke 9 for the input motion is equal to the instantaneous speed of the rear yoke 7 for the output motion once the angle α is equal to the angle β. The joint makes the angles α and β be constantly equal. The variation of said angles (α, β) causes the moving of the centre of rotation (C) of the joint (OJ) which in turn causes the movement of the pin (10) of each yoke along the runaway (12) formed in the spherical bearings (11).

It is understood that during the rotation of the front yoke 9 of motion input, with the thrust of its pin 10 on the spherical bearing, a radial movement of the floating plate is caused which, in turn, acts on the pin 10 of the motion rear yoke 7 causing a rotation equal to that of the front yoke 9 of the motion input.

The force required to change the working angle of the spherical bearing, acting on the rear yoke 7 and transmitted from the pin 10 to the floating plate 8 and then to the front yoke 9, will be transmitted between different components through surfaces well-polished and oiled, and as wide as possible.

Fig. 2 shows the floating plate 8 with its parts 11 and 11a and 11b with their housing surfaces suitable for receiving the spherical parts 11a.

Fig. 3 shows the position of the yokes 7 and 9 with their pins 10 within their respective runways 12. The contact surface of the pin (10) with the runway (12) and the contact surface between the spherical parts (11a) and respective housings (11b) are maximized to reduce the wear of the surfaces, in particular the surface of each housing (11b) on which the spherical part (11a) swings is of 1.170 mm².

## Claims

1. Wide-angle constant-velocity joint (OJ) for use on agricultural machines where two angles, one (α) between the axis of the front yoke (9) and the transverse axis (X-X) of the joint and the other (β) between the axis of the rear yoke (7) and the transverse axis (X-X) of the joint, remain the same during the joint work and where, between the two opposite yokes (7, 9) a plate (8) is floating between the two yokes and bears two opposite contact surfaces (11b) **characterized in that** the plate (8) is floating between the two yokes and two shims (3) and bears a couple of opposite swinging spherical bearings (11), each housed in a corresponding contact surface (11b) of the plate (8) and defining a runway (12) along which the pin (10) of the corresponding yoke (7, 9) is able to move according to the angular movement of the two yokes.

2. Wide-angle constant-velocity joint (OJ) according to claim 1 **characterized in that** each of the contact surfaces (11b) of the plate (8) is suitable for receiving the corresponding swinging spherical parts (11a) of the swinging spherical bearing (11).

3. Wide-angle constant-velocity joint (OJ) according to claims 1, 2 **characterized in that** the two shims (3) are floating between the yokes (7, 9).

4. Wide-angle constant-velocity joint (OJ) according to claims 1, 2 **characterized in that** the two shims (3) are fixed between the yokes (7, 9).

## Patentansprüche

1. Weitwinkel-Gleichlaufgelenk (OJ) zur Verwendung bei landwirtschaftlichen Maschinen, wobei zwei Winkel, einer (α) zwischen der Achse des vorderen Jochs (9) und der Querachse (X-X) des Gelenks und der andere (β) zwischen der Achse des hinteren Joch (7) und der Querachse (X-X) des Gelenks während des Gelenksbetriebs gleich bleiben, wobei zwischen den zwei gegenüberliegenden Jochen (7, 9) eine Platte (8) zwischen den zwei Jochen schwimmt und zwei gegenüberliegende Kontaktflächen (11b) trägt, **dadurch gekennzeichnet, dass** die Platte (3) zwischen den zwei Jochen und zwei Ausgleichsscheiben (3) schwimmt und ein paar von gegenüberliegenden Schwenk-Kugellagern (11) trägt, von denen jedes in einer entsprechenden Kontaktfläche (11b) der Platte (8) aufgenommen ist und eine Laufbahn (12) definiert, entlang der der Zapfen (10) des entsprechenden Jochs (7, 9) sich entsprechend der Winkelbewegung der zwei Joche bewegen kann.

2. Weitwinkel-Gleichlaufgelenk (OJ) nach Anspruch 1, **dadurch gekennzeichnet, dass** jede der Kontaktflächen (11b) der Platte (8) zur Aufnahme der entsprechenden Schwenk-Kugelteile (11a) des Schwenk-Kugellagers (11) geeignet ist.

3. Weitwinkel-Gleichlaufgelenk (OJ) nach Anspruch 1, 2, **dadurch gekennzeichnet, dass** die zwei Ausgleichsscheiben (3) zwischen den Jochen (7, 9) schwimmen.

4. Weitwinkel-Gleichlaufgelenk (OJ) nach den Ansprüchen 1, 2, **dadurch gekennzeichnet, dass** die zwei Ausgleichsscheiben (3) zwischen den Jochen (7, 9) befestigt sind.

## Revendications

1. Joint homocinétique à grand angle (OJ) destiné à être utilisé dans des machines agricoles dans lequel deux angles, à savoir l'un (α) situé entre l'axe de la mâchoire frontale (9) et l'axe transversal (X-X) du joint et l'autre (β) situé entre l'axe de la mâchoire arrière (7) et l'axe transversal (X-X) du joint restent constant au cours du fonctionnement du joint, et dans lequel une plaque (8) est montée flottante, entre les deux mâchoires opposées (7, 9) et supporte deux surfaces de contact opposées (11b),
**caractérisé en ce que**
la plaque (8) est montée flottante entre les deux mâchoires et deux cales (3) et supporte un couple de paliers sphériques oscillants opposés (11) logés chacun dans une surface de contact correspondante (11b) de la plaque (8), et
définissant une piste (12) le long laquelle la broche (10) de la mâchoire (7, 9) correspondante est susceptible de se déplacer conformément au déplacement angulaire des deux mâchoires.

2. Joint homocinétique à grand angle (OJ) conforme à la revendication 1, **caractérisé en ce que**
chacune des surfaces de contact (11b) de la plaque (8) est susceptible de recevoir les parties sphériques oscillantes (11a) correspondantes du palier sphérique oscillant (11).

3. Joint homocinétique à grand angle (OJ) conforme aux revendications 1 et 2,
**caractérisé en ce que**
les deux cales (3) sont montées flottantes entre les mâchoires (7, 9).

4. Joint homocinétique à grand angle (OJ) conforme aux revendications 1 et 2,
**caractérisé en ce que**
les deux cales (3) sont fixées entre les mâchoires (7, 9).
